# EUROPÄISCHE PATENTANMELDUNG

(11) **EP 4 541 591 A1**
(43) Veröffentlichungstag der Anmeldung: **23.04.2025**
(21) Anmeldenummer: 23204515.3
(22) Anmeldetag: 19.10.2023
(51) Int. Cl.: B41F 21/04, B29C 64/118, B33Y 80/00, B41J 13/22, B65H 5/08, B65H 29/02

(54) **GREIFER FÜR BOGENFÖRMIGEN BEDRUCKSTOFF**

(71) Anmelder: Heidelberger Druckmaschinen AG, 69115 Heidelberg (DE)
(72) Erfinder: Rausch, Kevin, 69234 Dielheim (DE); Busch, Alexander, 69257 Wiesenbach (DE)

(57) **Zusammenfassung**

Ein erfindungsgemäßer Greifer für bogenförmigen Bedruckstoff, mit einem Körper (2) aus faserverstärktem Kunststoff, zeichnet sich dadurch aus, dass der Körper (2) einen Schichtaufbau (20, 41) aufweist, wobei die Schichten (20, 41) unlösbar miteinander verbunden sind und sich in einer Mehrzahl der Schichten (20, 41) jeweils wenigstens eine durchgängige Faser (30, 30a) befindet. Die Erfindung ermöglicht es in vorteilhafter Weise, Greifer in Leichtbauweise mit der erforderlichen Festigkeit und mit den erforderlichen tribologischen Eigenschaften herzustellen. Die Erfindung kommt z.B. in Bogendruckmaschinen zum Einsatz.

## Beschreibung

### Erfindung

Die Erfindung betrifft einen Greifer für bogenförmigen Bedruckstoff mit den Merkmalen des Oberbegriffs von Anspruch 1.

### Gebiet der Technik

Die Erfindung liegt auf dem technischen Gebiet der grafischen Industrie und dort insbesondere im Bereich des Haltens und Fördern von flachen, bogenförmigen Substraten, mittels betätigbarer Greifer, bevorzugt Papier, Karton, Pappe, Kunststoff, Metall, Etiketten- oder Verbundmaterial.

### Stand der Technik

Bogenverarbeitende Druckmaschinen weisen üblicherweise Förderzylinder für die Bedruckstoffbogen auf, welche Greifersysteme mit einer Vielzahl von betätigbaren Greifern umfassen (z.B. zweimal etwa 20 Greifer pro Zylinder). In Auslegern solcher Maschinen kommen zudem an Ketten geführte Greiferbrücken mit ebenfalls einer Vielzahl von betätigbaren Greifern zum Einsatz. Solche Greifer sind üblicherweise aus Metall, z.B. im Messingguss, gefertigt und haben daher ein entsprechend hohes Gewicht. Durch Verwendung von Kunststoff kann das Gewicht der Greifer reduziert werden (Stichwort Leichtbauweise), jedoch leidet dabei die Festigkeit der Greifer und die tribologischen Eigenschaften können sich unerwünscht verändern.

Die DE2703843A1 offenbart ein Bogenhaltelement, mit einem Körper aus glasfaserverstärktem Thermoplastwerkstoff. Über die Länge der Fasern sind dabei keine Angaben gemacht, ebenso wenig zum Aufbau und zur Herstellung des Köpers.

Das Verstärken von Bauteilen aus Kunststoff, insbesondere von Greifern, unter Verwendung von Fasern ist somit bereits bekannt. Weiterhin ist das additive Herstellen ("3D-Drucken") von Bauteilen aus Kunststoff an sich und auch unter Verwendung von "Endlosfasem" bereits bekannt, d.h. unter Verwendung von Fasern, welche während des additiven Herstellens der Bauteile von einer Spule abgewickelt und in den Kunststoff eingebettet werden. Entsprechende 3D-Drucker sind am Markt verfügbar.

### Technische Aufgabe

Es ist vor diesem Hintergrund Aufgabe der vorliegenden Erfindung, eine Verbesserung gegenüber dem Stand der Technik zu schaffen, welche es insbesondere ermöglicht, Greifer in Leichtbauweise mit der erforderlichen Festigkeit und mit den erforderlichen tribologischen Eigenschaften herzustellen.

### Erfindungsgemäße Lösung der Aufgabe

Diese Aufgabe wird erfindungsgemäß durch einen Greifer nach Anspruch 1 gelöst.

Vorteilhafte und daher bevorzugte Weiterbildungen der Erfindung ergeben sich aus den Unteransprüchen sowie aus der Beschreibung und den Zeichnungen.

Ein erfindungsgemäßer Greifer für bogenförmigen Bedruckstoff, mit einem Körper aus faserverstärktem Kunststoff, zeichnet sich dadurch aus, dass der Körper einen Schichtaufbau aufweist, wobei die Schichten unlösbar miteinander verbunden sind und sich in einer Mehrzahl der Schichten jeweils wenigstens eine durchgängige Faser befindet.

### Vorteilhafte Ausbildungen und Wirkungen der Erfindung

Die Erfindung ermöglicht es in vorteilhafter Weise, Greifer in Leichtbauweise mit der erforderlichen Festigkeit und mit den erforderlichen tribologischen Eigenschaften herzustellen.

Durch das Vorsehen, insbesondere Einbetten, von Fasern, bevorzugt Kohlefasern, kann das Gewicht des Greifers bei gleicher oder sogar verbesserter Festigkeit in vorteilhafter Weise (gegenüber einem Greifer aus Metall) deutlich reduziert werden. Durch die Gewichtsreduktion des einzelnen Greifers wird in vorteilhafter Weise auch eine Reduktion des Gewichts einer gesamten Greiferbaugruppe mit einer Vielzahl an Greifern erreicht. Das Gewicht eines einzelnen Greifers kann erfindungsgemäß um etwa 80 % reduziert werden, das Gewicht der Greiferbaugruppe um etwa 50 %.

Das Merkmal, dass "die Schichten unlösbar miteinander verbunden sind" ist so zu verstehen, dass ein Lösen der Schichten voneinander das Zerstören des Körpers zur Folge hätte.

Das Merkmal, dass sich in einer Mehrzahl der Schichten jeweils "wenigstens eine durchgängige Faser befindet" ist wie folgt zu verstehen: Der Körper weist wenigstens eine Abmessung auf, z.B. eine Abmessung in Umfangsrichtung bei einem im Wesentlichen ringförmigen Körper. Die Länge einer durchgängigen Faser entspricht im Wesentlichen der Länge der Abmessung oder mehr, also z.B. der Länge der Abmessung im Umfangsrichtung. Bevorzugt mehr als 90 oder 95%. Unwesentliche Unterschiede können sich zum Beispiel durch das Abtrennen einer Faser von einem (bevorzugt "endlosen", z.B. aufgespulten) Faservorrat ergeben. Die Länge einer durchgängigen Faser kann auch ein Mehrfaches der Abmessung betragen, z.B. wenn eine solche Faser mehrfach in Umfangsrichtung angeordnet ist.

Die Erfindung kommt z.B. in Bogendruckmaschinen oder in Weiterverarbeitungsmaschinen der grafischen Industrie zum Einsatz.

### Weiterbildungen der Erfindung

Im Folgenden werden bevorzugte Weiterbildungen der Erfindung (kurz: Weiterbildungen) beschrieben. Diese können - wo es sich nicht technisch ausschließt - auch untereinander kombiniert werden.

Eine Weiterbildung kann sich dadurch auszeichnen, dass die Schichten additiv gefertigt sind, bevorzugt mittels flüssigem oder pastösem Material gedruckt. Eine Weiterbildung kann sich dadurch auszeichnen, dass die Schichten aus Kunststoff gefertigt sind. Eine Weiterbildung kann sich dadurch auszeichnen, dass die Schichten aus zueinander benachbarten (z.B. mittels einer Düse) erzeugten Kunststoffbahnen aufgebaut sind. Eine Weiterbildung kann sich dadurch auszeichnen, dass die Schichten miteinander verschmolzen sind. Eine Weiterbildung kann sich dadurch auszeichnen, dass die Schichten quer zu einer Längsachse des Körpers orientiert sind, insbesondere bei einem im Wesentlichen ringförmigen Körper. Eine Weiterbildung kann sich dadurch auszeichnen, dass mehr als 100 Schichten und mehr als 100 durchgängige Fasern vorhanden sind.

Eine Weiterbildung kann sich dadurch auszeichnen, dass die Faser in einer Ebene angeordnet ist. Eine Weiterbildung kann sich dadurch auszeichnen, dass die Ebene parallel zur Ebene der Schicht liegt. Eine Weiterbildung kann sich dadurch auszeichnen, dass die Faser in den Kunststoff eingebettet ist.

Eine Weiterbildung kann sich dadurch auszeichnen, dass der Körper eine zentrale Aussparung aufweist, zum Beispiel im Wesentlichen ringförmig ausgebildet ist. Eine Weiterbildung kann sich dadurch auszeichnen, dass die Aussparung zur Montage des Köpers auf einer Greiferstange ausgebildet ist. Eine Weiterbildung kann sich dadurch auszeichnen, dass die Faser um die Aussparung herum liegend in einer Umlaufrichtung in der Schicht angeordnet ist. Eine Weiterbildung kann sich dadurch auszeichnen, dass die Faser einen Faseranfang und ein Faserende aufweist und dass das Faserende nahe beim Faseranfang angeordnet ist; bevorzugt so nahe, wie es der Produktionsprozess erlaubt. Eine Weiterbildung kann sich dadurch auszeichnen, dass die Faseranfänge und Faserenden in benachbarten Schichten in Umlaufrichtung zueinander versetzt angeordnet sind. Durch das Vorsehen eines solchen Versatzes kann die Festigkeit des Körpers in vorteilhafter Weise weiter verbessert werden.

Eine Weiterbildung kann sich dadurch auszeichnen, dass der Köper wenigstens eine radial nach Innen zur zentralen Aussparung hin gerichtete Nut zur Aufnahme eines Lagers umfasst.

Eine Weiterbildung kann sich dadurch auszeichnen, dass die Fasern Kohlenstofffasern, Aramidfasern oder Glasfasern sind.

Eine Weiterbildung kann sich dadurch auszeichnen, dass der Körper wenigstens eine Nut aufweist. Eine Weiterbildung kann sich dadurch auszeichnen, dass ein Gleit- oder Wälzlager in der Nut angeordnet ist. Die Lager können aus Messing gefertigt sein; alternativ ebenfalls wie der Körper aus Kunststoff.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele zur Erfindung und Figuren

Die Figuren zeigen ein bevorzugtes Ausführungsbeispiel der Erfindung und der Weiterbildungen. Einander entsprechende Merkmale sind in den Figuren mit denselben Bezugszeichen versehen.
Figur 1 zeigt ein bevorzugtes Ausführungsbeispiel eines erfindungsgemäßen Greifers in perspektivischer Darstellung.
Die Figur 2 zeigt ein bevorzugtes Ausführungsbeispiel eines erfindungsgemäßen Greifers in Schnittansichten.

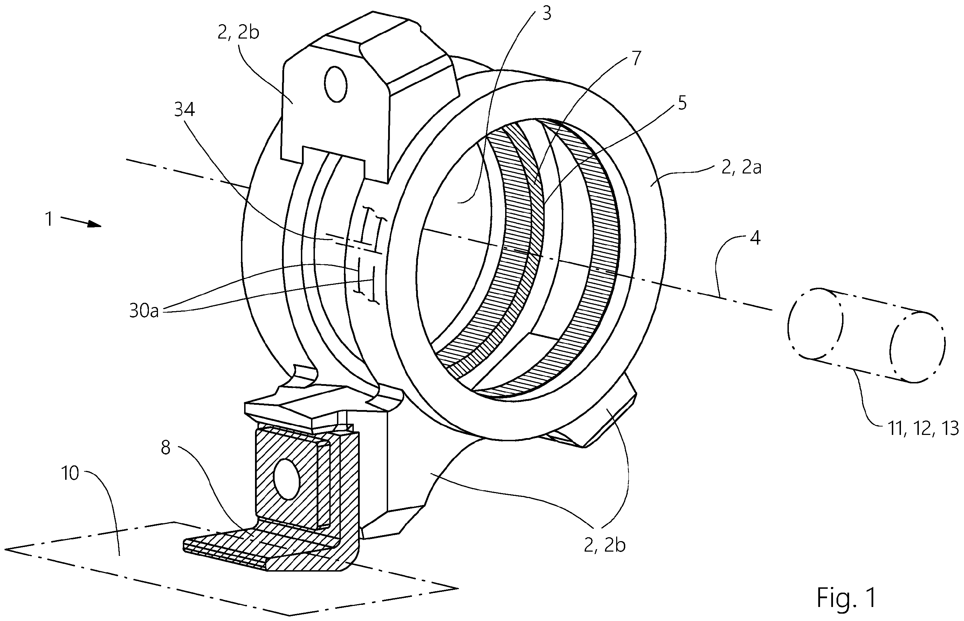

In Figur 1 ist ein erfindungsgemäßer (Leichtbau-) Greifer 1 bzw. dessen Körper 2 dargestellt. Der Greifer (bevorzugt gemeinsam mit einer nicht dargestellten Greiferauflage) dient bevorzugt dem Halten eines Bogens aus Bedruckstoff 10 (nur abschnittsweise und strichpunktiert dargestellt) während dessen Transports. Der Körper 2 umfasst einen ringförmigen Körperabschnitt 2a und daran angeordnet mehrere radial vorspringende Körperabschnitte 2b. An einem der vorspringenden Körperabschnitte kann zum Beispiel ein Greiferfinger 8 (schraffiert dargestellt), bevorzugt aus Metall, montiert sein. Der Körper 2 umfasst weiterhin eine zentrale Aussparung 3 in Richtung der Längsachse 4 des Körpers 2 und zwei nach innen gerichtete, umlaufende Nuten 5. Mittels der Aussparung 3 kann der Körper 2 auf einer Greiferstange 11 einer Greifereinrichtung 12 einer Druckmaschine 13 (gemeinsam symbolisch und strichpunktiert dargestellt) aufgenommen sein. In den Nuten 5 kann jeweils ein Lager 7, insbesondere ein Lagerring 7 (schraffiert dargestellt), angeordnet sein, wobei die Lagerringe 7 bevorzugt aus Messing oder Bronze gefertigt sein können. Alternativ kann der Lagerring aus Kunststoff mit den Anforderungen entsprechenden tribologischen Eigenschaften gefertigt sein. Weiter alternativ kann auch ein Wälzlager angeordnet sein.

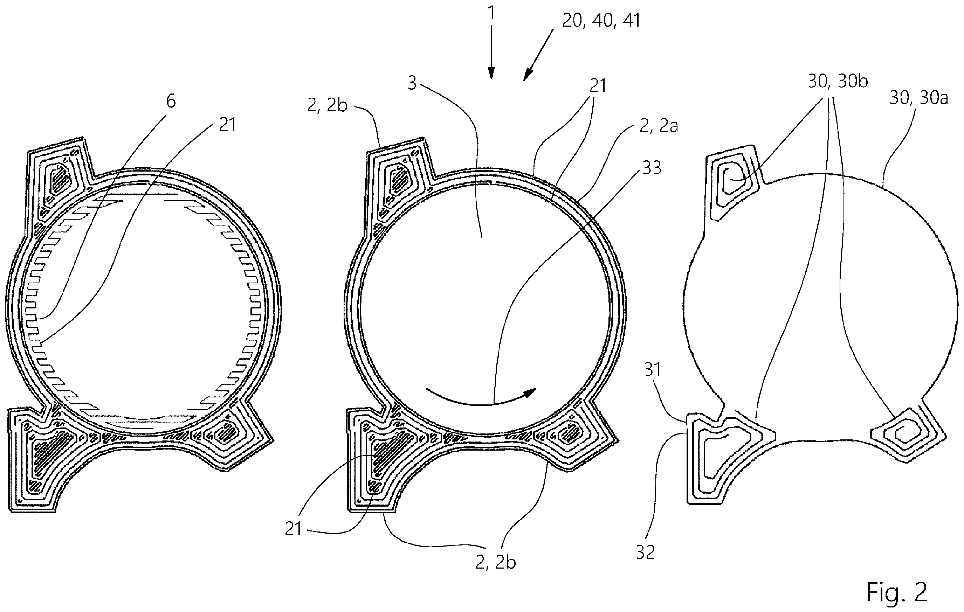

In der Figur 2 ist links, mittig und rechts jeweils ein (dieselbe) Schicht 20 des Körpers 2 dargestellt. Die mittlere Darstellung zeigt die Schicht 20 bzw. die Schichtebene 41, welche senkrecht zur Längsachse 4 des Körpers 2 angeordnet ist, mit ihren eingebetteten Fasern 30, bevorzugt aus Kohlenstoff. Die rechte Darstellung zeigt zur Verdeutlichung nur die Fasern 30. Die in der mittleren Darstellung gezeigten Linien, welche nicht den Linien in der rechten Darstellung, also den Fasern 30 entsprechen, stellen produktionsbedingte Bahnen 21 des Körpers 2 aus Kunststoff dar. Diese Bahnen 21 entstehen während der additiven Fertigung und verschmelzen miteinander. Bei einem ausgehärteten Körper 2 sind die Bahnen und die Schichten nicht mehr (zerstörungsfrei) voneinander zu trennen. Es ist erkennbar, dass der Körper 2 radial nach innen und radial nach außen von beispielhaft je zwei Kunststoffbahnen gebildet ist. Es ist auch erkennbar, dass der Körper in seinem Innern von mäanderförmigen Kunststoffbahnen gebildet ist. Die linke Darstellung zeigt denselben Körper 2 wie die mittige Darstellung, jedoch mit einer zusätzlichen Stützstruktur 6, bzw. Bahnen 22 der Stützstruktur. Die Stützstruktur 6 wird nach der Produktion aus dem Körper herausgebrochen; sie ist lediglich eine Hilfsstruktur für das additive Fertigen.

In rechten Darstellung ist erkennbar, dass beispielhaft vier Fasern 30 in der Schichtebene 41 angeordnet sind. Die Fasern 30 bilden eine Faserebene 40. Eine der Fasern ist eine durchgängige Faser 30a; diese ist in Umfangsrichtung bezüglich der Längsachse 4 des Körpers 2 angeordnet. Die drei weiteren Fasern sind spiralförmig verlaufende Fasern 30b. Jede der Fasern 30 hat einen Faseranfang 31 und ein Faserende 32. Der Faseranfang 31 und das Faserende 32 der durchgängigen Faser 30a liegen benachbart zueinander in der Schichtebene 4; der Abstand des Faseranfangs 31 und des Faserendes 32 in Umfangsrichtung ist durch den Produktionsprozess gegeben und wird bevorzugt minimal gehalten. In einer (nicht dargestellten) darunter oder darüber befindlichen weiteren Schichtebene 41 sind der Faseranfang 31 und das Faserende 32 mit einem Versatz 34 in Umfangsrichtung hierzu angeordnet. Der Versatz 34 ist symbolisch in Figur 1 für zwei (nur abschnittsweise dargestellte) umlaufende Fasern 30a in verschiedenen Schichten/Ebenen dargestellt

Für das Herstellen des Körpers 2 kann ein sogenannter 3-D-Drucker eingesetzt werden. Dieser umfasst bevorzugt einen Druckkopf mit zwei Düsen: eine druckt den Kunststoff in Bahnen, die andere appliziert die "Endlos-" Faser. Ein Messer dient dabei dem Abtrennen eines Faserstranges nach dessen Applikation.

### Bezugszeichenliste

- 1: Greifer
- 2: Körper
- 2a: Köperabschnitt, ringförmig
- 2b: Körperabschnitte, vorspringend
- 3: zentrale Aussparung
- 4: Längsachse
- 5: Nut/-en
- 6: Stützstruktur
- 7: Lager, insbesondere Lagerring/-e
- 8: Greiferfinger
- 10: Bedruckstoff
- 11: Greiferstange
- 12: Greifereinrichtung
- 13: Druckmaschine
- 20: Schicht/-en
- 21: Bahn/-en des Körpers
- 22: Bahn/-en der Stützstruktur
- 30: Faser/-n
- 30a: umlaufende Faser
- 30b: Fasern
- 31: Faseranfang
- 32: Faserende
- 33: Umlaufrichtung
- 34: Versatz
- 40: Faserebene
- 41: Schichtebene

## Patentansprüche

1. Greifer für bogenförmigen Bedruckstoff, mit einem Körper aus faserverstärktem Kunststoff,
**dadurch gekennzeichnet,**
**dass** der Körper (2) einen Schichtaufbau (20, 41) aufweist, wobei die Schichten (20, 41) unlösbar miteinander verbunden sind und sich in einer Mehrzahl der Schichten (20, 41) jeweils wenigstens eine durchgängige Faser (30, 30 a) befindet.

2. Greifer nach Anspruch 1,
**dadurch gekennzeichnet,**
**dass** die Schichten (20, 41) additiv gefertigt sind.

3. Greifer nach einem der vorhergehenden Ansprüche,
**dadurch gekennzeichnet,**
**dass** die Schichten (20, 41) quer zu einer Längsachse (4) des Körpers (2) orientiert sind.

4. Greifer nach einem der vorhergehenden Ansprüche,
**dadurch gekennzeichnet,**
**dass** die Faser (30, 30a) in einer Ebene (40) angeordnet ist.

5. Greifer nach einem der vorhergehenden Ansprüche,
**dadurch gekennzeichnet,**
**dass** der Körper (2) eine zentrale Aussparung (3) aufweist.

6. Greifer nach Anspruch 5,
**dadurch gekennzeichnet,**
**dass** die Aussparung (3) zur Montage des Köpers (2) auf einer Greiferstange (11) ausgebildet ist.

7. Greifer nach Anspruch 5 oder 6,
**dadurch gekennzeichnet,**
**dass** die Faser (30, 30 a) um die Aussparung (3) herum liegend in einer Umlaufrichtung in der Schicht (20) angeordnet ist.

8. Greifer nach Anspruch 7,
**dadurch gekennzeichnet,**
**dass** die Faser (30, 30 a) einen Faseranfang (31) und ein Faserende (32) aufweist und dass das Faserende (32) nahe beim Faseranfang (31) angeordnet ist.

9. Greifer nach Anspruch 8,
**dadurch gekennzeichnet,**
**dass** die Faseranfänge (31) und Faserenden (32) in benachbarten Schichten (20, 40, 41) in Umlaufrichtung zueinander versetzt (34) angeordnet sind.

10. Greifer nach einem der vorhergehenden Ansprüche 5 bis 9,
**dadurch gekennzeichnet,**
**dass** der Köper (2) wenigstens eine radial nach Innen zur zentralen Aussparung (3) hin gerichtete Nut (5) zur Aufnahme eines Lagers (7) umfasst.

11. Greifer nach einem der vorhergehenden Ansprüche,
**dadurch gekennzeichnet,**
**dass** die Fasern (30) Kohlenstofffasern, Aramidfasern oder Glasfasern sind.
